# EUROPÄISCHE PATENTSCHRIFT

(11) **EP 3 531 193 B1**
(45) Veröffentlichungstag und Bekanntmachung des Hinweises auf die Patenterteilung: **24.08.2022**
(21) Anmeldenummer: 19158159.4
(22) Anmeldetag: 19.02.2019
(51) Int. Cl.: G02C 5/22

(54) **FEDERSCHARNIERTEIL FÜR EIN BRILLENGESTELL, FEDERSCHARNIER MIT EINEM SOLCHEN FEDERSCHARNIERTEIL, UND VERFAHREN ZUM MONTIEREN EINES SOLCHEN FEDERSCHARNIERTEILS**
SPRING HINGE PART FOR A SPECTACLE FRAME, SPRING HINGE WITH SUCH A SPRING HINGE PART AND METHOD FOR MOUNTING SUCH A SPRING HINGE PART
PARTIE CHARNIÈRE À RESSORT POUR UNE MONTURE DE LUNETTE, CHARNIÈRE À RESSORT DOTÉE D'UNE TELLE PARTIE CHARNIÈRE À RESSORT ET PROCÉDÉ DE MONTAGE D'UNE TELLE PARTIE CHARNIÈRE À RESSORT

(30) Priorität: 23.02.2018 DE 102018202800
(43) Veröffentlichungstag der Anmeldung: 28.08.2019
(73) Patentinhaber: OBE GmbH & Co. KG, 75228 Ispringen (DE)
(72) Erfinder: Fiehn, Jörg, 75239 Eisingen (DE)
(74) Vertreter: Kordel, Mattias

(56) Entgegenhaltungen:
- WO-A1-00/63739
- WO-A1-02/099512
- WO-A1-2004/057409
- DE-A1- 10 234 209
- DE-U1- 9 114 917

## Beschreibung

Die Erfindung betrifft ein Federscharnierteil für ein Brillengestell, ein Federscharnier mit einem solchen Federscharnierteil und ein Verfahren zum Montieren eines solchen Federscharnierteils. Ein Federscharnierteil für ein Brillengestell der hier angesprochenen Art weist ein eine Längsachse aufweisendes Aufhahmeelement auf, wobei das Aufnahmeelement eine Stirnseite aufweist. Ausgehend von dieser Stirnseite erstreckt sich eine Aufnahmeaussparung in ein Inneres des Aufhahmeelements hinein. Die Aufnahmeaussparung ist entlang einer gedachten Umfangslinie zumindest bereichsweise von einer Wandung des Aufnahmeelements begrenzt; außerdem ist die Aufnahmeaussparung im Inneren des Aufhahmeelements von einem Boden begrenzt. Ausgehend von der Stirnseite erstrecken sich entgegen der Aufnahmeaussparung, das heißt entlang der Längsachse gesehen in entgegengesetzte Richtung, nämlich von der Aufnahmeaussparung weg, zwei voneinander senkrecht zu der Längsachse beabstandete Scharnierarme, die miteinander fluchtende Scharnierbohrungen zur Aufnahme einer Scharnierachse aufweisen. In der Aufnahmeaussparung ist ein Federelement angeordnet, das sich in der Aufnahmeaussparung einerseits an dem Boden und andererseits an einem ersten Ende eines Stößels abstützt, wobei der Stößel mit einem zweiten Ende aus der Aufnahmeaussparung herausragt und mit dem zweiten Ende zwischen den Scharnierarmen angeordnet ist.

Bei einem solchen Federscharnierteil besteht das Problem, dass der Stößel bei einer Demontage eines das Federscharnierteil aufweisenden Federscharniers leicht durch die Federvorspannung des Federelements aus der Aufnahmeaussparung herausgeschleudert werden und verlorengehen kann. Um dieses Problem zu lösen, sind teilweise komplizierte und schwierig herzustellende Mechanismen vorgeschlagen worden. Aus der deutschen Gebrauchsmusterschrift DE 20 2011 103 166 U1 geht beispielsweise ein Stößel hervor, der sich mittels elastisch nachgiebiger Rippen in der Aufnahmeaussparung hält. Die elastisch nachgiebigen Rippen werden durch Einschnitte in einem Grundkörper des Stößels gebildet, was den Stößel selbst schwächt und eine aufwendige Herstellung bedingt.

Aus dem europäischen Patent EP 1 272 891 B1 geht eine Ausgestaltung hervor, bei welcher einem Sitz für den Stößel gegenüber vorspringende Scharnierabschnitte elastisch verbogen werden können, um den Sitz zu öffnen und den Stößel einzuführen, bis sich der Sitz auf eine Weise um den Stößel wieder schließt, dass dieser entgegen der Kraft der Feder durch elastisches Verklemmen gehalten wird. Hierzu bedarf es einer federelastischen Ausgestaltung des Aufhahmeelements im Bereich der Stirnseite, was schwierig zu fertigen ist und außerdem die Gefahr eines Ausleierns und damit einer mit der Zeit degradierenden Funktionsfähigkeit des Federscharnierteils mit sich bringt.

Der Erfindung liegt die Aufgabe zugrunde, ein Federscharnierteil der zuvor beschriebenen Art derart weiterzubilden, dass die genannten Nachteile nicht auftreten. Weiterhin liegt der Erfindung die Aufgabe zugrunde, ein Federscharnier mit einem solchen Federscharnierteil sowie ein Verfahren zum Montieren eines solchen Federscharnierteils zu schaffen, wobei die genannten Nachteile nicht auftreten.

Die Aufgabe wird gelöst, indem die Gegenstände der unabhängigen Ansprüche geschaffen werden. Vorteilhafte Ausgestaltungen ergeben sich aus den Unteransprüchen.

Die Aufgabe wird insbesondere gelöst, indem ein Federscharnierteil der eingangs genannten Art derart weitergebildet wird, dass die Wandung des Aufhahmeelements - in einem Abstand von der Stirnseite in Richtung des Bodens - eine Verformung aufweist, die so ausgebildet ist, dass die Verformung der Wandung in die Aufhahmeaussparung hinein radial vorspringt und dort einen Anschlag für den Stößel bildet. Somit kann der Stößel in einfacher und sehr sicherer Weise auch in dem von einem Federscharnier demontierten Federscharnierteil gehalten werden, wobei die Verformung in einfacher Weise in die Wandung des Aufhahmeelements eingebracht werden kann, sodass das hier vorgeschlagene Federscharnier einfach und unkompliziert herstellbar ist. Weiterhin bedarf es weder einer Schwächung der Aufhahmeaussparung im Bereich der Stirnseite, noch einer Schwächung des Stößels, sodass diese Teile des Federscharnierteils sehr stabil ausgebildet sein können.

Die Aufhahmeaussparung wird bevorzugt - insbesondere im Bereich der Verformung - entlang einer geschlossenen Umfangslinie von der Wandung des Aufnahmeelements begrenzt. Die Wandung erstreckt sich also - in Umfangsrichtung gesehen - vollständig um die Aufhahmeaussparung herum, wodurch das Aufnahmeelement im Bereich der Aufnahmeaussparung sehr stabil ausgebildet ist. Insbesondere ist die Wandung inelastisch und/oder starr ausgebildet.

Eine Längsrichtung weist entlang der Längsachse des Aufnahmeelements, wobei die Längsachse entlang einer längsten Erstreckung des Aufnahmeelements und/oder entlang einer Erstreckung der Aufhahmeaussparung in das Innere des Aufnahmeelements hinein weist. Eine radiale Richtung steht senkrecht auf der Längsrichtung. Eine Umfangsrichtung umgreift die Längsrichtung konzentrisch. Die Längsachse steht bevorzugt senkrecht auf der Stirnseite des Aufnahmeelements.

Die Verformung bildet einen Anschlag für den Stößel derart, dass der Stößel durch das Federelement in Richtung des Anschlags drängbar und/oder mit einer Vorspannkraft beaufschlagt ist.

Der Anschlag für den Stößel wird durch die Verformung derart bereitgestellt, dass der Stößel nicht aufgrund der Federspannung des Federelements aus der Aufnahmeaussparung herausgedrängt werden kann.

Der Stößel ist - insbesondere auch unter Berücksichtigung der Verformung der Wandung - in der Aufnahmeaussparung in Längsrichtung verlagerbar. Insbesondere dient die Verformung nicht dazu, den Stößel in der Aufhahmeaussparung festzulegen, sondern vielmehr nur dazu, einen Anschlag für den Fall bereitzustellen, dass der Stößel bei demontiertem Federscharnier durch die Vorspannkraft des Federelements in eine Richtung aus der Aufnahmeaussparung herausgedrängt wird, wobei er in diesem Fall an der Verformung anschlägt und von der Verformung daran gehindert wird, aus der Aufnahmeaussparung herausverlagert zu werden.

Die Verformung stellt dabei bevorzugt einen Anschlag für das erste Ende des Stößels dar, das heißt gemäß einer bevorzugten Ausgestaltung schlägt im Fall der Demontage des das Federscharnierteil aufweisenden Federscharniers der Stößel mit dem ersten Ende an dem Anschlag an. Es ist aber auch möglich, dass der Stößel mit einem anderen Bereich an dem Anschlag anschlägt.

Von dem ersten Ende des Stößels aus gesehen ist der Anschlag der Stirnseite zugewandt angeordnet, er liegt also zwischen dem ersten Ende des Stößels und der Stirnseite.

Es ist möglich, dass das Federscharnierteil - insbesondere entlang einer geschlossenen Umfangslinie - eine Mehrzahl von Verformungen der Wandung aufweist. Es ist aber auch eine Ausgestaltung möglich, bei der lediglich genau eine solche Verformung vorgesehen ist. Diese kann lokal oder auch in Umfangsrichtung umlaufend ausgebildet sein.

Die Verformung ist gemäß einer bevorzugten Ausgestaltung als Sicke ausgebildet.

Das erste Ende des Stößels liegt dem zweiten Ende des Stößels insbesondere in Längsrichtung des Stößels gesehen gegenüber. Die Längsrichtung des Stößels ist dabei in montiertem Zustand identisch mit der Längsrichtung des Aufnahmeelements und insbesondere der Aufnahmeaussparung.

Gemäß einer Weiterbildung der Erfindung ist vorgesehen, dass der Stößel zwischen seinem ersten Ende und seinem zweiten Ende einen in radialer Richtung zurückspringenden Rücksprungbereich aufweist, in dem der Stößel relativ zu der Verformung in Längsrichtung verlagerbar ist. Insbesondere greift die Verformung der Wandung in diesen Rücksprungbereich ein, wobei sie den Stößel nicht an einer Relativverlagerung relativ zu der Verformung hindert, solange der Stößel nicht an der Verformung anschlägt. Wird allerdings das Federscharnier demontiert, wird der Stößel durch das Federelement gegen den durch die Verformung gebildeten Anschlag gedrängt und hierdurch in der Aufnahmeaussparung zurückgehalten. Besonders bevorzugt wird der Stößel dabei mit seinem ersten Ende gegen den Anschlag gedrängt.

Der Rücksprungbereich ist bevorzugt als durchmesserreduzierter Bereich ausgebildet, also als ein Bereich, in dem der Stößel eine kleinere Außenabmessung aufweist, als insbesondere im Bereich des ersten Endes einerseits und des zweiten Endes andererseits, beziehungsweise als - in Längsrichtung gesehen - einerseits vor dem Rücksprungbereich und andererseits hinter dem Rücksprungbereich. Besonders bevorzugt ist der Stößel in seinem in die Aufnahmeaussparung hineinragenden Bereich rotationssymmetrisch, insbesondere kreiszylindrisch ausgebildet. In diesem Fall ist der Rücksprungbereich vorzugsweise als radialer Einstich ausgebildet, wobei der Stößel in dem Rücksprungbereich einen kleineren Außendurchmesser aufweist, als einerseits vor und andererseits hinter dem Rücksprungbereich.

Vorzugsweise ist die Aufnahmeaussparung kreiszylindrisch ausgebildet und weist einen - vorzugsweise entlang ihrer Längserstreckung bis zu dem Boden konstanten - Innendurchmesser auf. Insbesondere kann die Aufnahmeaussparung als Bohrung in dem Aufnahmeelement ausgebildet sein. Bevorzugt ist das erste Ende des Stößels als kreiszylindrischer Bereich ausgebildet, dessen Außendurchmesser passgenau auf den Innendurchmesser der Aufnahmeaussparung abgestimmt ist, so dass der Stößel sicher und stabil in der Aufnahmeaussparung geführt wird. An ein dem ersten Ende abgewandtes Ende des Rücksprungbereichs schließt sich vorzugsweise ein kreiszylindrisch ausgebildeter Führungsbereich des Stößels an, der ebenfalls einen Außendurchmesser aufweist, der passgenau derart auf den Innendurchmesser der Aufnahmeaussparung abgestimmt ist, dass der Stößel auch hier sicher und stabil in der Aufnahmeaussparung - in Längsrichtung verlagerbar - geführt wird.

Gemäß einer Weiterbildung der Erfindung ist vorgesehen, dass der Stößel verdrehsicher zwischen den Scharnierarmen gelagert ist. Somit kann eine unerwünschte Drehbewegung des Stößels um die Längsachse vermieden werden. Dabei weist der Stößel vorzugsweise an seinem aus der Aufnahmeaussparung herausragenden zweiten Ende radiale Vorsprünge auf, welche die Stirnseite übergreifen und zwischen den Scharnierarmen verdrehsicher geführt und gehalten sind. Insgesamt ist der Stößel vorzugsweise insbesondere T-förmig ausgebildet, wobei das zweite Ende des Stößels quasi den Querbalken des T bildet, wobei der Führungsbereich, der Rücksprungbereich und das erste Ende quasi den Längsbalken des T bilden.

Gemäß einer Weiterbildung der Erfindung ist vorgesehen, dass das Aufnahmeelement als kreiszylindrische Hülse ausgebildet ist. Dies stellt eine ebenso einfache wie stabile Ausgestaltung des Aufnahmeelements dar, wobei dieses auch in einfacher Weise herstellbar ist. Vorzugsweise ist in das Aufnahmeelement - insbesondere symmetrisch zu einer Ebene, in der die Längsachse liegt - ein Längsschlitz eingebracht, durch den die beiden Scharnierarme gebildet werden. Insbesondere trennt der vorzugsweise symmetrisch oder mittig angeordnete Längsschlitz die Scharnierarme voneinander. Ein Schlitzgrund des Längsschlitzes bildet vorzugsweise die Stirnseite des Aufnahmeelements.

Das Aufnahmeelement kann auch eine andere, beliebige Geometrie, beispielsweise eine im Querschnitt quadratische, rechteckförmige oder ovale Ausgestaltung aufweisen.

Gemäß einer Weiterbildung der Erfindung ist vorgesehen, dass das Aufnahmeelement an einem Brillenbügel angeordnet ist. Dabei kann es insbesondere mit dem Brillenbügel verbunden, beispielsweise verschweißt, verklebt, verlötet, oder in anderer geeigneter Weise an dem Brillenbügel befestigt sein. Alternativ ist es möglich, dass das Aufnahmeelement Teil eines Brillenbügels ist. Insbesondere kann das Aufnahmeelement einstückig mit dem Brillenbügel ausgebildet sein.

Es ist aber auch möglich, dass das Aufnahmeelement an einem Mittelteil einer Brille angeordnet oder Teil des Mittelteils der Brille ist.

Die Aufgabe wird auch gelöst, indem ein Federscharnier für ein Brillengestell geschaffen wird, welches ein erstes Federscharnierteil aufweist, das gemäß der Erfindung oder gemäß einem der zuvor beschriebenen Ausführungsbeispiele ausgebildet ist. Das Federscharnier weist außerdem ein zweites Federscharnierteil auf, wobei das zweite Federscharnierteil einen Scharnierlappen aufweist, der eine Schamierlappenbohrung aufweist. Dieser Scharnierlappen ist derart zwischen den Scharnierarmen des ersten Federschamierteils angeordnet, dass die Scharnierlappenbohrung mit den Scharnierbohrungen der Scharnierarme des ersten Federscharnierteils entlang einer Schwenkachse des Federscharniers fluchtet. Der Scharnierlappen weist eine Nockenkontur auf, die mit dem zweiten Ende des Stößels zusammenwirkt, um den Stößel entgegen der Federvorspannung des Federelements zu verlagern, wenn die Federscharnierteile relativ zueinander um die Schwenkachse geschwenkt werden. In Zusammenhang mit dem Federscharnier ergeben sich insbesondere die bereits in Zusammenhang mit dem Federscharnierteil erwähnten Vorteile. Im Übrigen entspricht die Funktionsweise des hier vorgeschlagenen Federscharniers der Funktionsweise bekannter, entsprechender Federscharniere, sodass hierauf nicht näher im Detail eingegangen wird.

Insgesamt handelt es sich bei dem Federscharnier bevorzugt um eine Ausgestaltung, bei der das erste Federscharnierteil zweirollig und das zweite Federscharnierteil einrollig ausgebildet ist, wobei der genau eine Scharnierlappen des zweiten Federscharnierteils zwischen die genau zwei Scharnierarme des ersten Federscharnierteils eingreift und mit diesen schwenkbeweglich entlang der Schwenkachse über die Schamierlappenbohrung einerseits und die Scharnierbohrungen andererseits verbunden ist.

Insbesondere erstreckt sich bevorzugt eine Scharnierachse durch die Scharnierlappenbohrung einerseits und die Scharnierbohrungen der Scharnierarme andererseits, wobei die beiden Federscharnierteile des Federscharniers mittels der Scharnierachse schwenkbeweglich miteinander verbunden sind. Die Scharnierachse kann als Schraube, als Achsstift, oder in anderer geeigneter Weise ausgebildet sein.

Gemäß einer Weiterbildung der Erfindung ist vorgesehen, dass das erste Federscharnierteil an einem ersten Brillenteil angeordnet ist, das ausgewählt ist aus einem Brillenbügel und einem Mittelteil, wobei das zweite Federscharnierteil an einem zweiten Brillenteil angeordnet ist, das ausgewählt ist aus einem Mittelteil einer Brille und einem Brillenbügel. Das zweite Federscharnierteil ist dabei an dem jeweils anderen Brillenteil, ausgewählt aus dem Brillenbügel und dem Mittelteil, angeordnet als das erste Federscharnierteil. Mittels des Federscharniers wird somit insbesondere ein Brillenbügel mit einem Mittelteil einer Brille verbunden, wobei der Brillenbügel insbesondere schwenkbeweglich zwischen einer Offenstellung, die auch als Tragstellung bezeichnet wird, und einer Schließstellung oder Einklappstellung verschwenkbar ist. Die Federscharnierteile können dabei jeweils an dem entsprechenden Brillenteil befestigt oder auch integral oder einstückig mit dem entsprechenden Brillenteil ausgebildet sein.

Besonders bevorzugt ist das erste Federscharnierteil an einem Brillenbügel angeordnet oder Teil des Brillenbügels, und das zweite Federscharnierteil ist an dem Mittelteil der Brille angeordnet oder Teil des Mittelteils, insbesondere integral oder einstückig mit dem Mittelteil ausgebildet.

Die Aufgabe wird schließlich auch gelöst, indem ein Verfahren zum Montieren eines Federscharnierteils geschaffen wird, wobei im Rahmen des Verfahrens insbesondere ein erfindungsgemäßes Federscharnierteil oder ein Federscharnierteil nach einem der zuvor beschriebenen Ausführungsbeispiele montiert wird. Das Verfahren weist folgende Schritte auf: Ein Federelement wird in einer Aufnahmeaussparung eines Aufnahmeelements angeordnet. Ein Stößel wird mit einem ersten Ende in der Aufnahmeaussparung angeordnet. Dabei wird der Stößel vorzugsweise entweder gemeinsam mit dem Federelement oder nach dem Federelement in die Aufnahmeaussparung eingeführt, derart, dass das Federelement zwischen einem Boden der Aufnahmeaussparung und dem ersten Ende des Stößels in der Aufnahmeaussparung angeordnet ist. Anschließend wird eine Wandung des Aufnahmeelements im Bereich der Aufnahmeaussparung verformt, wobei durch das Verformen der Wandung ein Anschlag für den Stößel in der Aufnahmeaussparung geschaffen wird. Hierdurch wird das montierte Federscharnierteil erhalten. In Zusammenhang mit dem Verfahren ergeben sich insbesondere die bereits in Zusammenhang mit dem Federscharnierteil und dem Federscharnier erwähnten Vorteile. Das Federscharnierteil ist mit dem hier vorgeschlagenen Verfahren sehr einfach, prozess- und funktionssicher sowie stabil montierbar.

Die Wandung der Aufnahmeaussparung wird insbesondere nicht elastisch zum Zweck des Einbringens des Stößels in die Aufnahmeaussparung verformt. Vielmehr erfolgt eine bevorzugt inelastische, dauerhafte Verformung der Wandung nach dem Einbringen des Stößels in die Aufhahmeaussparung, sodass durch die Verformung ein Anschlag für den Stößel bereitgestellt wird, durch welchen der Stößel dauerhaft in der Aufnahmeaussparung gehalten wird, sodass er auch nach einer Demontage eines das Federscharnierteil aufweisenden Federscharniers nicht aufgrund der Federvorspannung des Federelements aus der Aufnahmeaussparung herausgedrängt werden kann.

Gemäß einer Weiterbildung der Erfindung ist vorgesehen, dass die Wandung in den zwischen dem ersten Ende und dem zweiten Ende des Stößels angeordneten Rücksprungbereich des Stößels hineingeformt wird. Auf diese Weise bleibt der Stößel insbesondere mit seinem Rücksprungbereich relativ zu der Verformung - in Längsrichtung gesehen - verlagerbar in der Aufhahmeaussparung gehalten, sodass er seine übliche Funktionsweise im Rahmen der Funktion des Federscharniers ausführen kann. Gleichwohl wird der Stößel durch die Verformung effektiv daran gehindert, aus der Aufnahmeaussparung heraus zu gelangen.

Gemäß einer Weiterbildung der Erfindung ist vorgesehen, dass die Verformung als Sicke erzeugt wird. Insbesondere kann die Verformung erzeugt werden, indem die Wandung der Aufhahmeaussparung lokal mittels eines geeigneten Werkzeugs nach innen in die Aufhahmeaussparung hinein geformt, insbesondere eingeschlagen wird. Die Wandung wird im Bereich der Verformung bevorzugt dauerhaft und inelastisch verformt.

Es ist möglich, dass eine Wandstärke der Wandung im Bereich der späteren Verformung vor dem Verformen reduziert wird, beispielsweise durch Vorbohren. Dies wird bevorzugt durchgeführt, wenn das Aufhahmeelement eine von der kreiszylindrischen Geometrie abweichende Form aufweist. Insbesondere wenn das Aufhahmeelement dagegen als kreiszylindrische Hülse ausgebildet ist, kann die Wandstärke der Wandung so dünn gewählt werden, dass es keiner weiteren Reduzierung derselben vor dem Verformen bedarf.

Wichtig ist, dass dabei der Stößel nicht mittels der Verformung fixiert wird, sondern vielmehr in Längsrichtung gesehen innerhalb der Aufhahmeaussparung verlagerbar bleibt, wobei er aber durch den durch die Verformung bereitgestellten Anschlag daran gehindert wird, aus der Ausnahmeaussparung heraus zu gelangen.

Die Beschreibungen des Verfahrens einerseits sowie des Federscharnierteils und des Federscharniers andererseits sind komplementär zueinander zu verstehen. Merkmale des Federscharnierteils und des Federscharniers, die explizit oder implizit in Zusammenhang mit dem Verfahren erläutert sind, sind bevorzugt einzeln oder miteinander kombiniert Merkmale eines bevorzugten Ausführungsbeispiels des Federschamierteils oder des Federscharniers. Verfahrensschritte, die explizit oder implizit in Zusammenhang mit dem Federscharnierteil oder dem Federscharnier erläutert sind, sind bevorzugt einzeln oder miteinander kombiniert Schritte einer bevorzugten Ausführungsform des Verfahrens. Das Verfahren zeichnet sich bevorzugt durch wenigstens einen Schritt aus, der durch wenigstens ein Merkmal eines erfindungsgemäßen oder bevorzugten Ausführungsbeispiels des Federscharnierteils oder des Federscharniers bedingt ist. Das Federscharnierteil und/oder das Federscharnier zeichnet/zeichnen sich bevorzugt durch wenigstens ein Merkmal aus, welches durch wenigstens einen Schritt einer erfindungsgemäßen oder bevorzugten Ausführungsform des Verfahrens bedingt ist.

Die Erfindung wird im Folgenden anhand der Zeichnung näher erläutert. Dabei zeigen:
- Figur 1: eine Längsschnittdarstellung eines Federscharniers;
- Figur 2: eine Explosionsdarstellung des Federscharniers gemäß Figur 1 vor einer Montage, und
- Figur 3: eine Darstellung eines ersten Federscharnierteils des Federscharniers gemäß den Figuren 1 und 2 nach der Montage.

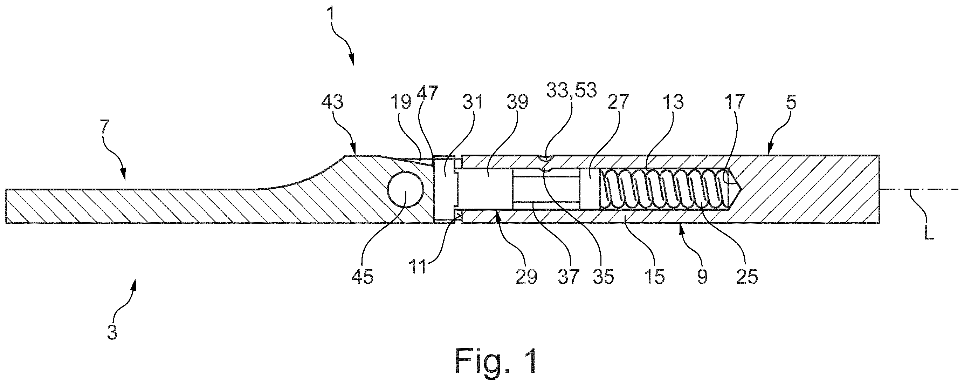

**Fig. 1** zeigt eine Längsschnittdarstellung eines Ausführungsbeispiels eines Federscharniers 1 für ein Brillengestell 3, wobei das Federscharnier 1 ein erstes Federscharnierteil 5 und ein zweites Federscharnierteil 7 aufweist.

Das erste Federscharnierteil 5 weist ein eine Längsachse L aufweisendes Aufnahmeelement 9 auf, das eine Stirnseite 11 aufweist. Ausgehend von der Stirnseite 11 erstreckt sich eine Aufnahmeaussparung 13 in ein Inneres des Aufnahmeelements 9 hinein. Die Aufnahmeaussparung 13 ist dabei entlang einer vorzugsweise geschlossenen, gedachten Umfangslinie von einer Wandung 15 des Aufnahmeelements 9 sowie im Inneren des Aufnahmeelements 9 von einem Boden 17 begrenzt.

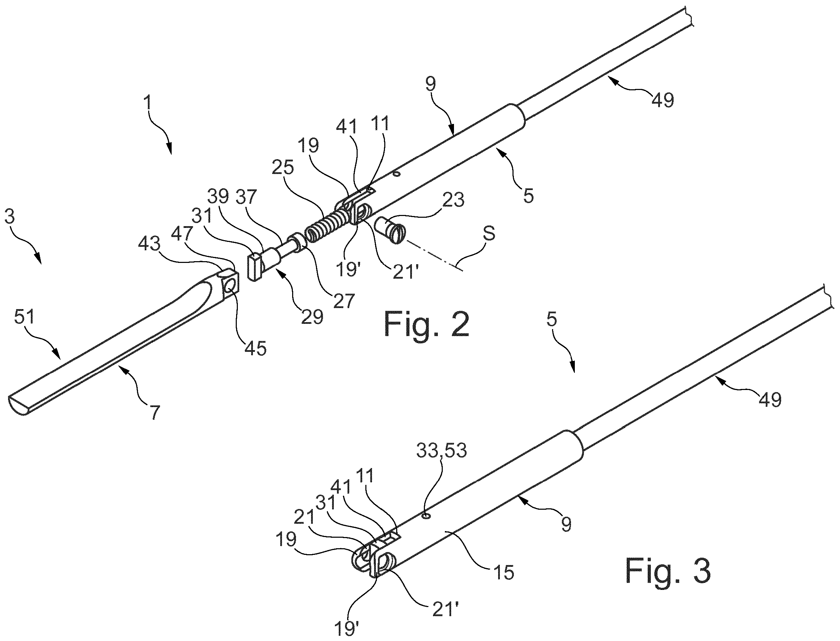

Ausgehend von der Stirnseite 11 erstrecken sich entgegen der Aufnahmeaussparung 13 zwei voneinander senkrecht zu der Längsachse L beabstandete Scharnierarme 19, 19', wobei in Figur 1 nur ein Scharnierarm 19 der Scharnierarme 19, 19' dargestellt ist, wobei beide Scharnierarme 19, 19' in den Figuren 2 und 3 dargestellt sind. Die Scharnierarme 19, 19' weisen miteinander fluchtende Scharnierbohrungen 21, 21' auf, die insbesondere in Figur 3 dargestellt sind. Diese Scharnierbohrungen 21, 21' sind eingerichtet zur Aufnahme einer in Figur 2 dargestellten Scharnierachse 23, die beispielsweise als Schraube ausgebildet sein kann.

In der Aufnahmeaussparung 13 ist ein Federelement 25 angeordnet, das sich in der Aufhahmeaussparung 13 einerseits an dem Boden 17 und andererseits an einem ersten Ende 27 eines Stößels 29 abstützt, wobei der Stößel 29 mit einem zweiten Ende 31 aus der Aufhahmeaussparung 13 hinausragt. Dabei ist der Stößel 29 mit dem zweiten Ende 31 zwischen den Scharnierarmen 19, 19' angeordnet. Der Stößel 29 ist in der Aufnahmeaussparung 13 in Längsrichtung verlagerbar.

Es ist vorgesehen, dass die Wandung 15 des Aufnahmeelements 9 in einem Abstand von der Stirnseite 11 - in Richtung des Bodens 17 versetzt - eine Verformung 33 aufweist, sodass die Verformung 33 in die Aufhahmeaussparung 13 hinein radial vorspringt und in der Aufhahmeaussparung 13 einen Anschlag 35 für den Stößel 29, hier insbesondere für das erste Ende 27 des Stößels 29, bildet. Der Stößel 29 ist dabei durch das Federelement 25 in Richtung des Anschlags 35 beaufschlagt.

Auf diese Weise wird ein einfach herstellbares, zugleich stabiles, robustes Federscharnierteil 5 geschaffen, bei dem in einfacher und prozesssicherer Weise gewährleistet ist, dass der Stößel 29 nicht bei einer Demontage des Federscharniers 1 aus der Aufnahmeaussparung 13 herausgelangen kann.

Das Federelement 25 ist bei dem hier dargestellten Ausführungsbeispiel in bevorzugter Ausgestaltung als Schraubenfeder ausgebildet.

Der Stößel 29 weist zwischen dem ersten Ende 27 und dem zweiten Ende 31 einen in radialer Richtung zurückspringenden Rücksprungbereich 37 auf, wobei der Stößel 29 in dem Rücksprungbereich 37 relativ zu der Verformung 33 in Längsrichtung verlagerbar ist. Der Rücksprungbereich 37 ist dabei bevorzugt als durchmesserreduzierter Bereich ausgebildet - insbesondere bei kreiszylindrischer Ausgestaltung des Stößels 29 zumindest im Bereich des ersten Endes 27 und dem Bereich des Rücksprungbereichs 37 -, wobei er besonders bevorzugt als radialer Einstich ausgebildet ist.

Zwischen dem Rücksprungbereich 37 und dem zweiten Ende 31 weist der Stößel 29 bevorzugt einen Führungsbereich 39 auf, wobei der Stößel 29 in dem Führungsbereich 39 einerseits und im Bereich des ersten Endes 27 andererseits bevorzugt einen Durchmesser aufweist, der so auf einen Innendurchmesser der Aufnahmeaussparung 13 abgestimmt ist, dass der Stößel 29 sicher und stabil entlang der Längsachse L in der Aufhahmeaussparung 13 geführt ist.

Zugleich ist der Stößel 29 vorzugsweise verdrehsicher zwischen den Scharnierarmen 19, 19' gelagert, insbesondere indem - wie in Figur 2 ersichtlich - der Stößel 29 insgesamt T-förmig ausgebildet ist, wobei das zweite Ende 31 einen Querbalken des T bildet und radial über den Führungsbereich 39, den Rücksprungbereich 37 und das erste Ende 27 bereichsweise vorsteht, sodass es gegen Verdrehung gesichert zwischen den Scharnierarmen 19, 19' gehalten und geführt ist.

Das Aufnahmeelement 9 ist vorzugsweise als kreiszylindrische Hülse ausgebildet, wobei es insbesondere einen Längsschlitz 41 aufweist, der entlang der Längsachse L in das Aufnahmeelement 9 symmetrisch eingebracht ist, wodurch die Scharnierarme 19, 19' ausgebildet sind. Dies ist insbesondere in Figur 2 erkennbar.

Das zweite Federscharnierteil 7 weist hier insbesondere genau einen Scharnierlappen 43 auf, der in montiertem Zustand zwischen den Scharnierarmen 19, 19' des ersten Federscharnierteils 5 angeordnet ist. Der Scharnierlappen 43 weist dabei eine Schamierlappenbohrung 45 auf, die in montiertem Zustand mit den Scharnierbohrungen 21, 21' der Scharnierarme 19, 19' entlang einer gedachten Schwenkachse S des Federscharniers 1 fluchtet. Wie in Figur 2 dargestellt, ist in montiertem Zustand bevorzugt durch die Schamierlappenbohrung 45 und die Scharnierbohrungen 21, 21' die Scharnierachse 23, insbesondere in Form einer Schraube, geführt, sodass die Federscharnierteile 5, 7 schwenkbar aneinander gehalten sind. Insbesondere sind das erste Federscharnierteil 5 und das zweite Federscharnierteil 7 relativ zueinander um die Schwenkachse S und insbesondere um die Scharnierachse 23 relativ zueinander schwenkbar.

Der Scharnierlappen 43 weist eine Nockenkontur 47 auf, die mit dem zweiten Ende 31 des Stößels 29 zusammenwirkt, um den Stößel 29 entgegen der Federvorspannung des Federelements 25 zu verlagern, wenn die Federscharnierteile 5, 7 relativ zueinander um die Schwenkachse S geschwenkt werden. Dies entspricht der üblichen und grundsätzlich bekannten Funktionsweise eines Federscharniers, sodass hierauf nicht im Detail eingegangen wird.

Fig. 2 zeigt eine Explosionsdarstellung des Federscharniers 1 gemäß Figur 1. Gleiche und funktionsgleiche Elemente sind mit gleichen Bezugszeichen versehen, sodass insofern auf die vorangegangene Beschreibung verwiesen wird. Dabei zeigt sich, dass bei dem hier dargestellten Ausführungsbeispiel das Aufnahmeelement 9 an einem Brillenbügel 49 angeordnet oder bevorzugt Teil des Brillenbügels 49 ist. Insbesondere ist das Aufnahmeelement 9 bevorzugt einstückig mit dem Brillenbügel 49 ausgebildet.

Das zweite Federscharnierteil 7 ist vorzugsweise Teil eines Mittelteils 51 des Brillengestells 3, oder einstückig oder integral mit dem Mittelteil 51 ausgebildet.

Anhand von Figur 2 ist aufgrund der Explosionsdarstellung auch ein Verfahren zum Montieren des ersten Federscharnierteils 5 gemäß einer bevorzugten Ausgestaltung erkennbar: Dabei wird das Federelement 25 in der Aufhahmeaussparung 13 angeordnet. Der Stößel 29 wird mit dem ersten Ende 27 in der Aufhahmeaussparung 13 angeordnet, insbesondere so, dass das erste Ende 27 an dem Federelement 25 anliegt.

Anhand von Figur 2 zeigt sich insbesondere, dass die Wandung 15 des Aufnahmeelements 9 vor der Montage bevorzugt noch nicht verformt ist.

Fig. 3 zeigt das erste Federscharnierteil 5 des Federscharniers 1 gemäß den Figuren 1 und 2 in montiertem Zustand. Gleiche und funktionsgleiche Elemente sind mit gleichen Bezugszeichen versehen, sodass insofern auf die vorangegangene Beschreibung verwiesen wird. Dabei ist hier die Verformung 33 dargestellt, die nach dem Anordnen des Stößels 29 in der Aufhahmeaussparung 13 in die Wandung 15 eingebracht wird, um den Anschlag 35 für den Stößel 29 auszubilden. Es wird also die Wandung 15 nach dem Einbringen des Stößels 29 in die Aufhahmeaussparung 13 im Bereich derselben verformt, wobei durch das Verformen der Wandung 15 der Anschlag 35 für den Stößel 29 in der Aufhahmeaussparung 13 geschaffen wird. Dabei wird die Wandung 15 dauerhaft und inelastisch verformt, insbesondere in einem Bereich, in dem die Wandung entlang einer geschlossenen Umfangslinie geschlossen und somit auch insgesamt inelastisch und/oder starr ausgebildet ist.

Die Wandung 15 wird dabei insbesondere in den Rücksprungbereich 37 des Stößels 29 hineingeformt.

Besonders bevorzugt wird die Verformung 33 als Sicke 53 erzeugt.

Insgesamt wird mit dem hier vorgeschlagenen Federscharnierteil 5, dem Federscharnier 1 und dem Verfahren eine Möglichkeit geschaffen, in einfacher, prozesssicherer, reproduzierbarer und stabiler Weise einen Stößel 29 in einer Aufnahmeaussparung 13 des Federscharnierteils 5 zu halten, auch wenn das Federscharnier 1 demontiert wird.

## Patentansprüche

1. Federscharnierteil (5) für ein Brillengestell (3), mit
- einem eine Längsachse (L) aufweisenden Aufnahmeelement (9), wobei
- das Aufnahmeelement (9) eine Stirnseite (11) aufweist, wobei
- sich ausgehend von der Stirnseite (11) eine Aufnahmeaussparung (13) in ein Inneres des Aufnahmeelements (9) hinein erstreckt, wobei
- die Aufnahmeaussparung (13) entlang einer gedachten Umfangslinie zumindest bereichsweise von einer Wandung (15) des Aufnahmeelements (9) und im Inneren des Aufnahmeelements (9) von einem Boden (17) begrenzt ist, wobei
- sich ausgehend von der Stirnseite (11) entgegen der Aufnahmeaussparung (13) zwei voneinander senkrecht zur Längsachse (L) beabstandete Scharnierarme (19,19') erstrecken, die miteinander fluchtende Scharnierbohrungen (21,21') zur Aufnahme einer Scharnierachse (23) aufweisen, wobei
- in der Aufnahmeaussparung (13) ein Federelement (25) angeordnet ist, das sich in der Aufnahmeaussparung (13) einerseits an dem Boden (17) und andererseits an einem ersten Ende (27) eines in der Aufnahmeaussparung (13) in Längsrichtung verlagerbaren Stößels (29) abstützt, wobei
- der Stößel (29) mit einem zweiten Ende (31) aus der Aufnahmeaussparung (13) herausragt und zwischen den Scharnierarmen (19,19') angeordnet ist,
**dadurch gekennzeichnet, dass**
- die Wandung (15) des Aufnahmeelements (9) von der Stirnseite (11) in Richtung des Bodens (17) beabstandet eine nach Anordnen des Stößels (29) in der Aufnahmeaussparung (13) in die Wandung (15) eingebrachte Verformung (33) aufweist, sodass
- die Verformung (33) der Wandung (15) in die Aufnahmeaussparung (13) hinein radial vorspringt und einen Anschlag (35) für den Stößel (29) bildet.

2. Federscharnierteil (5) nach Anspruch 1, **dadurch gekennzeichnet, dass** der Stößel (29) zwischen dem ersten Ende (27) und dem zweiten Ende (31) einen in radialer Richtung zurückspringenden Rücksprungbereich (37) aufweist, in dem der Stößel (29) relativ zu der Verformung (33) in Längsrichtung verlagerbar ist.

3. Federscharnierteil (5) nach einem der vorhergehenden Ansprüche, **dadurch gekennzeichnet, dass** der Stößel (29) verdrehsicher zwischen den Scharnierarmen (19,19') gelagert ist.

4. Federscharnierteil (5) nach einem der vorhergehenden Ansprüche, **dadurch gekennzeichnet, dass** das Aufnahmeelement (9) als kreiszylindrische Hülse ausgebildet ist.

5. Federscharnierteil (5) nach einem der vorhergehenden Ansprüche, **dadurch gekennzeichnet, dass** das Aufnahmeelement (9) an einem Brillenbügel (49) angeordnet oder Teil eines Brillenbügels (49) ist.

6. Federscharnier (1) für ein Brillengestell (3), mit einem ersten Federscharnierteil (5) nach einem der Ansprüche 1 bis 5, und mit einem zweiten Federscharnierteil (7), wobei das zweite Federscharnierteil (7) einen Scharnierlappen (43) aufweist, der eine Scharnierlappenbohrung (45) aufweist und derart zwischen den Scharnierarmen (19,19') des ersten Federscharnierteils (5) angeordnet ist, dass die Scharnierlappenbohrung (45) mit den Scharnierbohrungen (21,21') der Scharnierarme (19,19') des ersten Federscharnierteils (5) entlang einer Schwenkachse (S) fluchtet, wobei der Scharnierlappen (43) eine Nockenkontur (47) aufweist, die mit dem zweiten Ende (31) des Stößels (29) zusammenwirkt, um den Stößel (29) entgegen der Federvorspannung des Federelements (25) zu verlagern, wenn die Federscharnierteile (5,7) relativ zueinander um die Schwenkachse geschwenkt werden.

7. Federscharnier (1) nach Anspruch 6, **dadurch gekennzeichnet, dass** das erste Federscharnierteil (5) an einem Brillenteil, ausgewählt aus einem Brillenbügel (49) und einem Mittelteil (51), angeordnet ist, wobei das zweite Federscharnierteil (7) an dem anderen Brillenteil, ausgewählt aus dem Mittelteil (51) und dem Brillenbügel (49), angeordnet ist.

8. Verfahren zum Montieren eines Federscharnierteils (5) nach einem der Ansprüche 1 bis 5, mit folgenden Schritten:
- Anordnen eines Federelements (25) in einer Aufnahmeaussparung (13) eines Aufnahmeelements (9);
- Anordnen eines Stößels (29) mit einem ersten Ende (27) in der Aufnahmeaussparung (13), und
- Verformen einer Wandung (15) des Aufnahmeelements (9) im Bereich der Aufnahmeaussparung (13) nach dem Anordnen des Stößels (29) in der Aufnahmeaussparung (13), wobei
- durch das Verformen der Wandung (15) ein Anschlag (35) für den in der Aufnahmeaussparung (13) in Längsrichtung verlagerbaren Stößel (39) in der Aufnahmeaussparung (13) geschaffen wird.

9. Verfahren nach Anspruch 8, **dadurch gekennzeichnet, dass** die Wandung (15) in einen zwischen dem ersten Ende (27) und einem zweiten Ende (31) des Stößels (29) angeordneten Rücksprungbereich (37) des Stößels (29) hineingeformt wird.

10. Verfahren nach einem der Ansprüche 8 oder 9, **dadurch gekennzeichnet, dass** die Verformung (33) als Sicke (53) erzeugt wird.

## Claims

1. Spring hinge part (5) for a spectacle frame (3), with
- a receiving element (9) having a longitudinal axis (L), wherein
- the receiving element (9) has an end face (11), wherein
- starting from the end face (11) a receiving recess (13) extends into an interior of the receiving element (9), wherein
- the receiving recess (13) is bounded along an imaginary circumferential line at least in regions by a wall (15) of the receiving element (9) and is bounded in the interior of the receiving element (9) by a floor (17), wherein
- two hinge arms (19, 19'), which are spaced apart from one another perpendicularly to the longitudinal axis (L), extend from the end face (11) away from the receiving recess (13) and have mutually aligned hinge bores (21, 21') for receiving a hinge axis (23), wherein
- a spring element (25) is arranged in the receiving recess (13), which spring element is supported in the receiving recess (13) on the one hand against the floor (17) and on the other hand against a first end (27) of a plunger (29) which can be displaced in the longitudinal direction in the receiving recess (13), wherein
- the plunger (29) protrudes with a second end (31) from the receiving recess (13) and is arranged between the hinge arms (19, 19'),
**characterised in that**
- the wall (15) of the receiving element (9) has, at a distance from the end face (11) in the direction of the floor (17), a deformation (33) introduced into the wall (15) after the plunger (29) has been arranged in the receiving recess (13), so that
- the deformation (33) of the wall (15) projects radially into the receiving recess (13) and forms a stop (35) for the plunger (29).

2. Spring hinge part (5) according to claim 1, **characterised in that** the plunger (29) has, between the first end (27) and the second end (31), a recessed region (37) which recedes in the radial direction and in which the plunger (29) can be displaced in the longitudinal direction relative to the deformation (33).

3. Spring hinge part (5) according to one of the preceding claims, **characterised in that** the plunger (29) is mounted non-rotatably between the hinge arms (19, 19').

4. Spring hinge part (5) according to one of the preceding claims, **characterized in that** the receiving element (9) is configured as a circular-cylindrical sleeve.

5. Spring hinge part (5) according to one of the preceding claims, **characterized in that** the receiving element (9) is arranged on a spectacle bow (49) or is part of a spectacle bow (49).

6. Spring hinge (1) for a spectacle frame (3), comprising a first spring hinge part (5) according to any one of claims 1 to 5, and a second spring hinge part (7), wherein the second spring hinge part (7) has a hinge lug (43) which has a hinge lug bore (45) and is arranged between the hinge arms (19, 19') of the first spring hinge part (5) in such a way that the hinge lug bore (45) is connected to the hinge bores (21, 21') of the hinge arms (19, 19') of the first spring hinge part (5) along a pivot axis (S), wherein the hinge lug (43) has a cam contour (47) which cooperates with the second end (31) of the plunger (29) in order to displace the plunger (29) against the spring bias of the spring element (25) when the spring hinge parts (5, 7) are pivoted relative to one another about the pivot axis.

7. Spring hinge (1) according to claim 6, **characterized in that** the first spring hinge part (5) is arranged on one spectacle part selected from a spectacle bow (49) and a middle part (51), wherein the second spring hinge part (7) is arranged on the other spectacle part selected from the middle part (51) and the spectacle bow (49).

8. Method for mounting a spring hinge part (5) according to any one of claims 1 to 5, comprising the following steps:
- Arranging a spring element (25) in a receiving recess (13) of a receiving element (9);
- arranging a plunger (29) with a first end (27) in the receiving recess (13), and
- deforming a wall (15) of the receiving element (9) in the region of the receiving recess (13) after arranging the plunger (29) in the receiving recess (13), wherein
- the deformation of the wall (15) creates a stop (35) in the receiving recess (13) for the plunger (39) which can be displaced in the longitudinal direction in the receiving recess (13).

9. Method according to claim 8, **characterized in that** the wall (15) is formed into a recessed area (37) of the plunger (29) arranged between the first end (27) and a second end (31) of the plunger (29).

10. Method according to any one of claims 8 or 9, **characterized in that** the deformation (33) is produced as a bead (53).

## Revendications

1. Partie de charnière à ressort (5) pour une monture de lunettes (3), avec
- un élément de réception (9) présentant un axe longitudinal (L), dans lequel
- l'élément de réception (9) présente une face frontale (11), dans lequel
- à partir de la face frontale (11), un évidement de réception (13) s'étend à un intérieur de l'élément de réception (9), dans lequel
- l'évidement de réception (13) est délimité le long d'une ligne périphérique imaginaire au moins par zones par une paroi (15) de l'élément de réception (9) et à l'intérieur de l'élément de réception (9) par un fond (17), dans lequel
- deux bras de charnière (19, 19') espacés l'un de l'autre perpendiculairement à l'axe longitudinal (L) s'étendent à partir de la face frontale (11) en direction opposée de l'évidement de réception (13), lesquels présentent des alésages de charnière (21, 21') alignés l'un avec l'autre pour recevoir un axe de charnière (23), dans lequel
- dans l'évidement de réception (13) est disposé un élément à ressort (25) qui s'appuie dans l'évidement de réception (13) d'une part sur le fond (17) et d'autre part sur une première extrémité (27) d'un poussoir (29) pouvant être déplacé en direction longitudinale dans l'évidement de réception (13), dans lequel
- le poussoir (29) dépasse de l'évidement de réception (13) par une deuxième extrémité (31) et est disposé entre les bras de charnière (19, 19'),
**caractérisé en ce que**
- la paroi (15) de l'élément de réception (9) présente, à distance de la face frontale (11) en direction du fond (17), une déformation (33) introduite dans la paroi (15) après avoir disposé le poussoir (29) dans l'évidement de réception (13), de sorte que
- la déformation (33) de la paroi (15) fait saillie radialement dans l'évidement de réception (13) et forme une butée (35) pour le poussoir (29).

2. Partie de charnière à ressort (5) selon la revendication 1, **caractérisée en ce que** le poussoir (29) présente, entre la première extrémité (27) et la deuxième extrémité (31), une zone de retrait (37) en retrait dans la direction radiale, dans laquelle le poussoir (29) peut être déplacé dans la direction longitudinale par rapport à la déformation (33).

3. Partie de charnière à ressort (5) selon l'une quelconque des revendications précédentes, **caractérisée en ce que** le poussoir (29) est monté sans possibilité de rotation entre les bras de charnière (19, 19').

4. Partie de charnière à ressort (5) selon l'une des revendications précédentes, **caractérisée en ce que** l'élément de réception (9) est réalisé sous la forme d'une douille cylindrique circulaire.

5. Partie de charnière à ressort (5) selon l'une des revendications précédentes, **caractérisée en ce que** l'élément de réception (9) est disposé sur une branche de lunettes (49) ou fait partie d'une branche de lunettes (49).

6. Charnière à ressort (1) pour une monture de lunettes (3), comprenant une première partie de charnière à ressort (5) selon l'une des revendications 1 à 5, et une deuxième partie de charnière à ressort (7), dans laquelle la deuxième partie de charnière à ressort (7) comprend une patte de charnière (43), qui présente un alésage de patte de charnière (45) et qui est disposée entre les bras de charnière (19, 19') de la première partie de charnière à ressort (5) de telle sorte que l'alésage de patte de charnière (45) est aligné avec les alésages de charnière (21, 21') des bras de charnière (19, 19') de la première partie de charnière à ressort (5) le long d'un axe de pivotement (S), dans lequel la patte de charnière (43) présente un contour de came (47) qui coopère avec la deuxième extrémité (31) du poussoir (29) pour déplacer le poussoir (29) à l'encontre de la précontrainte élastique de l'élément à ressort (25) lorsque les parties de charnière à ressort (5, 7) sont pivotées l'une par rapport à l'autre autour de l'axe de pivotement.

7. Charnière à ressort (1) selon la revendication 6, **caractérisée en ce que** la première partie de charnière à ressort (5) est disposée sur une partie de lunettes choisie parmi une branche de lunettes (49) et une partie centrale (51), la deuxième partie de charnière à ressort (7) étant disposée sur l'autre partie de lunettes choisie parmi la partie centrale (51) et la branche de lunettes (49).

8. Procédé de montage d'une partie de charnière à ressort (5) selon l'une des revendications 1 à 5, comprenant les étapes suivantes :
- Disposer un élément à ressort (25) dans un évidement de réception (13) d'un élément de réception (9) ;
- mise en place d'un poussoir (29) ayant une première extrémité (27) dans l'évidement de réception (13), et
- déformer une paroi (15) de l'élément de réception (9) dans la zone de l'évidement de réception (13) après la mise en place du poussoir (29) dans l'évidement de réception (13), dans lequel
- la déformation de la paroi (15) permet de créer une butée (35) pour le poussoir (39) déplaçable longitudinalement dans l'évidement de réception (13), dans l'évidement de réception (13).

9. Procédé selon la revendication 8, **caractérisé en ce que** la paroi (15) est formée dans une zone de retrait (37) du poussoir (29) située entre la première extrémité (27) et une deuxième extrémité (31) du poussoir (29).

10. Procédé selon l'une des revendications 8 ou 9, **caractérisé en ce que** la déformation (33) est produite sous forme de moulure (53).
